(19) Europäisches Patentamt
European Patent Office
Office européen des brevets

(11) **EP 2 884 697 B1**

(12) **EUROPEAN PATENT SPECIFICATION**

(45) Date of publication and mention
of the grant of the patent:
**11.04.2018 Bulletin 2018/15**

(21) Application number: **13841309.1**

(22) Date of filing: **17.06.2013**

(51) Int Cl.:
***H04L 12/26*** *(2006.01)*

(86) International application number:
**PCT/CN2013/077289**

(87) International publication number:
**WO 2014/048136 (03.04.2014 Gazette 2014/14)**

(54) **MEASURING METHOD, DEVICE AND SYSTEM FOR NETWORK PACKET LOSS**

MESSVERFAHREN, VORRICHTUNG UND SYSTEM ZUR MESSUNG EINES NETZWERKPAKETVERLUSTS

PROCÉDÉ, DISPOSITIF ET SYSTÈME DE MESURE DE PERTE DE PAQUETS DE RÉSEAU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.09.2012 CN 201210379426**

(43) Date of publication of application:
**17.06.2015 Bulletin 2015/25**

(73) Proprietor: **Huawei Technologies Co., Ltd.**
**Longgang District**
**Shenzhen, Guangdong 518129 (CN)**

(72) Inventors:
• **LIU, Yanjun**
**Shenzhen**
**Guangdong 518129 (CN)**
• **WANG, Zuliang**
**Shenzhen**
**Guangdong 518129 (CN)**
• **LIU, Hongming**
**Shenzhen**
**Guangdong 518129 (CN)**

(74) Representative: **Pfenning, Meinig & Partner mbB**
**Patent- und Rechtsanwälte**
**Theresienhöhe 11a**
**80339 München (DE)**

(56) References cited:
**EP-A1- 1 848 152     CN-A- 1 881 908**
**CN-A- 101 605 020     CN-A- 101 729 197**
**CN-A- 102 904 775     US-A1- 2008 080 390**

• **"Operation (OEB_ENTITY_AMPERSAND) Maintenance mechanism for MPLS networks; Y.1711 (02/04)", ITU-T STANDARD, INTERNATIONAL TELECOMMUNICATION UNION, GENEVA ; CH, no. Y.1711 (02/04), 12 February 2004 (2004-02-12), pages 1-36, XP017464786, [retrieved on 2006-01-06]**

**Description**

**TECHNICAL FIELD**

The present invention relates to communications technologies, and in particular, to a method, device, and system for measuring network packet loss.

**BACKGROUND**

With continuous progress of network information technologies, IP (Internet Protocol, IP) transformation of a network has become a trend. Under this trend, how to assess packet loss performance quality of an IP protocol based service has become an increasingly obvious problem.

In packet loss performance measurement defined by the prior art for a multi-protocol label switching (Multi-Protocol Label Switching, MPLS for short) network, packets are counted at a sending end and a receiving end of the network, and in packet loss statistics, either the sending end or the receiving end performs packet loss measurement in a centralized manner.

However, because the prior art is implemented based on an upstream sending point of the network and a downstream receiving point of the network, packet loss measurement cannot be implemented in a case in which one or multiple upstream sending points and multiple downstream receiving points exist, that is, in point-to-multipoint and multipoint-to-multipoint network scenarios, when a case that a failure of a network node device exists and so on, and service path switching is caused, the prior art is unable to implement a function of counting packets at the sending end and the receiving end at one end thereof in a centralized manner to perform packet loss measurement.

US2008/0080390A discloses a packet loss calculation system, wherein a sending probe sends a quality measurement packet to a receiving probe, and increments a sent packet counter every time the quality measurement packet is sent. A receiving probe

receives the quality measurement packet from the sending probe, and attaches a received packet counter to the quality measurement packet and returns the quality measurement packet to the sending probe. The sending probe receives a returned quality measurement packet, extracts a received packet count from the quality measurement packet, and calculates a packet loss rate by using a difference between the sent packet counter and the received packet counter and a difference between the received packet counter and the returned packed counter.

EP188152A1 discloses a method for measuring MPLS network performance parameter and device and system for transmitting packet. The method includes: firstly, setting the sequence number and time stamp and so on in the packet of the multi-protocol label switching MPLS network; then, measuring the MPLS network performance parameter according to the sequence number and time stamp for receiving and transmitting and so on in the packet. The invention provides the basis for the measure of SLA concordant in the existing MPLS network. The invention makes the detail provision for measuring the performance parameter of MPLS LSP, and provides the important reference for programming MPLS network or optimized configuring MPLS network distribution, so that MPLS network can develop the especial high performance.

"Operation (OEB_ENTITY_AMPERSAND) Maintenance mechanism for MPLS networks; Y.1711 (02/2004)" ITU-T STANDARD, INTERNATIONAL TELECOMMUNICATION UNION, GENEVA; CH, discloses mechanisms for user-plane OAM (Operation and Maintenance) functionality in MPLS networks according to the requirements and principles given in ITU-T Rec. Y.1710. The Recommendation is designed primarily to support point-to-point and multipoint-to-point explicit routed LSPs (ER-LSPs) with limited applicablility to LSPs that employ penultimate hop popping (PHP). The OAM mechanisms defined in this Recommendation assume common forwarding of the LSP payload and Y.1711 PDUs. In some situations this may not be true, such as when the LSP payload is load balanced across a plurality of parallel paths while still appearing as a single trail to the ingress and egress. LSRs introducing variations in connectivity are responsible for ensuring that the availability behavior of Y.1711 per ingress-egress pair is preserved.

**SUMMARY**

Embodiments of the present invention provide a method, device, and system for measuring network packet loss, so that in point-to-multipoint and multipoint-to-multipoint network scenarios, when a case that a failure of a network node device exists and so on and after service path switching is caused, it is implemented that statistics on counts of packets at a sending end and a receiving end can still be collected to determine a packet loss situation in packet loss measurement.

According to an aspect of the present invention, a method for measuring network packet loss includes:

performing, by a sending end, data packet counting processing on a service stream sent to a receiving end, to obtain a first data packet count corresponding to a measurement period identifier;

sending, by the sending end, an OAM packet including a measurement period identifier to be queried to the receiving end, where the OAM packet and a data packet of the service stream are transmitted on a same path;

receiving, by the sending end, a second data packet count that is fed back by the receiving end after the receiving end receives the OAM packet and corresponding to the measurement period identifier to be queried, where the second data packet count is a count obtained by the receiving end by performing data packet counting processing on the received service stream; and

determining, by the sending end, a network packet loss situation according to the first data packet count and the second data packet count.

Further, before the sending, by the sending end, an OAM packet including a measurement period identifier to be queried to the receiving end, the method further includes:

adding, by the sending end, a GAL label to the OAM packet, and encapsulating the OAM packet according to a destination address of the service stream.

According to another aspect of the present invention, a network device includes a counting module, a sending module, a receiving module, and a statistics module, where:

the counting module is configured to perform data packet counting processing on a service stream sent to a receiving end, to obtain a first data packet count corresponding to a measurement period identifier;

the sending module is configured to send an OAM packet including a measurement period identifier to be queried to the receiving end, where the OAM packet and a data packet of the service stream are transmitted on a same path;

the receiving module is configured to receive a second data packet count that is fed back by the receiving end after the receiving end receives the OAM packet and corresponding to the measurement period identifier to be queried, where the second data packet count is a count obtained by the receiving end by performing data packet counting processing on the received service stream; and

the statistics module is configured to determine a network packet loss situation according to the first data packet count and the second data packet count.

Further, the network device further includes:

an encapsulating module, configured to: before the sending module sends the OAM packet including the measurement period identifier to be queried to the receiving end, add a GAL label to the OAM packet, and encapsulate the OAM packet according to a destination address of the service stream.

According to another aspect of the present invention, a system for measuring network packet loss includes a CSG and at least one RSG, where the CSG uses the network device, and the RSG uses the network device.

By using the method, device, and system for measuring network packet loss according to the embodiments of the present invention, a sending-end network device performs data packet counting processing on a service stream sent to a receiving end, to obtain a first data packet count corresponding to a measurement period identifier; then the sending-end network device sends an OAM packet including a measurement period identifier to be queried to the receiving end; the sending-end network device adds a GAL label to the OAM packet, and encapsulates the OAM packet, where the OAM packet and a data packet of the service stream are transmitted on a same path, which ensures that the OAM packet and the data packet of the service stream may be transmitted through the same path; after receiving the OAM packet, a receiving-end network device pops the encapsulation and identifies the GAL label, and determines that the OAM packet is an OAM packet; the receiving-end network device feeds back a second data packet count corresponding to the measurement period identifier to be queried, where the second data packet count is a count obtained by the receiving end by performing data packet counting processing on the received service stream; and after the sending end receives the second data packet count fed back by the receiving end, the sending end determines a network packet loss situation according to the first data packet count and the second data packet count. By transmitting the OAM packet and the data packet of the service stream through the same path, in point-to-multipoint and multipoint-to-multipoint network scenarios, when a case that a failure of a receiving-end network device exists and so on, and after service path switching is caused, network packet loss measurement may be performed normally.

## BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and a person of ordinary skill in the art may still derive other drawings from these accompanying drawings without creative efforts.

FIG. 1 is a flowchart of a first embodiment of a method for measuring network packet loss according to the present invention;

FIG. 2 is a schematic diagram of OAM packet encapsulation in the first embodiment of a method for measuring network packet loss according to the present invention;

FIG. 3 is a schematic diagram of a method for adding an identifier in the first embodiment of a method for measuring network packet loss according to the present invention;

FIG. 4 is a signaling flowchart of a second embodiment of a method for measuring network packet loss according to the present invention;

FIG. 5 is a schematic structural diagram of a first embodiment of a network device according to the present invention;

FIG. 6 is a schematic structural diagram of a second embodiment of a network device according to the present invention;

FIG. 7 is a schematic structural diagram of a third embodiment of a network device according to the present invention; and

FIG. 8 is a schematic structural diagram of a second embodiment of a system for measuring network packet loss according to the present invention.

## DESCRIPTION OF EMBODIMENTS

To make the objectives, technical solutions, and advantages of the embodiments of the present invention clearer, the following clearly describes the technical solutions in the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments of the present invention without creative efforts shall fall within the protection scope of the present invention.

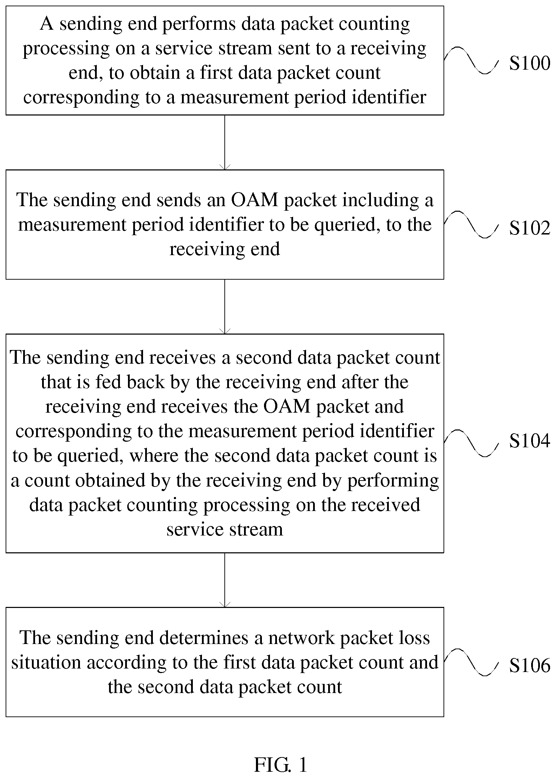

FIG. 1 is a flowchart of a first embodiment of a method for measuring network packet loss according to the present invention. As shown in FIG. 1, the method in this embodiment may include:

S100. A sending end performs data packet counting processing on a service stream sent to a receiving end, to obtain a first data packet count corresponding to a measurement period identifier.

Specifically, in the method for measuring network packet loss in this embodiment, network devices at the sending end and receiving end use an external time synchronization tool to perform synchronization processing on data packet counting of the sending end and receiving end. Optionally, the external time synchronization tool may be NTP (Network Time Protocol, NTP for short) or an IEEE (Institute of Electrical and Electronics Engineers, Institute of Electrical and Electronics Engineers, IEEE for short) 1588v2 clock. A synchronization deviation of NTP is 1 ms to 50 ms, which can ensure a synchronization requirement of the method for measuring network packet loss in this embodiment. The IEEE 1588v2 clock is a high-precision clock using the IEEE 1588v2 protocol. For a network deployed with an IEEE 1588v2 clock, by using the external time synchronization tool, a network device at an upstream sending end and a network device at a downstream tranceiving end may implement time synchronization.

A time synchronization method involved in the embodiment of the present invention is calibrating local time of the sending end and local time of the receiving end based on a common time reference (the NTP or IEEE 1588v2 clock). Further, boundary points of various periods (namely, a start time point of each period) are agreed by using the NTP or IEEE 1588v2 clock, that is, the start time point of each measurement period is aligned for the sending end and receiving end.

When the network device at the sending end counts packets in packet loss measurement in a unit of measurement period, the method for measuring network packet loss in this embodiment may provide multiple measurement periods of different durations, for example, 1 second, 3 seconds, 10 seconds, 1 minute, and 1 hour. A first data packet count generated in each measurement period corresponds to a measurement period identifier, and a formula for obtaining a measurement period identifier is as follows:

$$\text{Measurement period identifier} = \text{Global number of seconds/Measurement period duration}$$

The number of global seconds may be a time point at which the sending end adds an identifier to a first data packet within a measurement period, and the measurement period identifier is an integer obtained by rounding a result of dividing the number of global seconds by the measurement period duration. For example, if the duration of each measurement period is 1s, and a time point at which an identifier is added to a first data packet within a measurement period is 10s, the measurement period identifier of the measurement period is 10s/1s = 10, which is obtained according to the foregoing formula; if the duration of each measurement period is 2s, and a time point at which an identifier is added to a first data packet within a measurement period is 7s, then 7/2 = 3.5, and therefore the measurement period identifier is 3.

S102. The sending end sends an OAM (operation, (Operation), administration (Administration), maintenance (Maintenance), OAM for short) packet including a measurement period identifier to be queried to the receiving end.
S104. The sending end receives a second data packet count that is fed back by the receiving end after the receiving end receives the OAM packet and corresponding to the measurement period identifier to be queried, where the second data packet count is a count obtained by the receiving end by performing data packet counting processing on the received service stream.

The receiving-end network device performs data packet counting processing on the received service stream in a unit of measurement period to obtain a second data packet count. Because the sending-end network device and the receiving-end network device are synchronized by using an external synchronization tool, the second data packet count also corresponds to a measurement period identifier, and the measurement period identifier is consistent with the measurement period identifier corresponding to the first data packet count obtained by the sending-end network device within a same period.

S106. The sending end determines a network packet loss situation according to the first data packet count and the second data packet count.

The sending-end network device determines a network packet loss situation according to the following formula:

$$\text{Number of lost packets within the measurement period} = \text{First data packet count} - \text{Second data packet count.}$$

By using the method for measuring network packet loss according to this embodiment, a sending-end network device performs data packet counting processing on a service stream sent to a receiving end, to obtain a first data packet count corresponding to a measurement period identifier; then the sending-end network device sends an OAM packet including a measurement period identifier to be queried to the receiving end, where the OAM packet and a data packet of the service stream are transmitted on a same path, which ensures that the OAM packet and the data packet of the service stream may be transmitted through the same path; after receiving the OAM packet, the receiving end feeds back a second data packet count corresponding to the measurement period identifier to be queried, where the second data packet count is a count obtained by the receiving end by performing data packet counting processing on the received service stream; and after the sending end receives the second data packet count fed back by the receiving end, the sending end determines a network packet loss situation according to the first data packet count and the second data packet count. By transmitting the OAM packet and the data packet of the service stream through the same path, in point-to-multipoint and multipoint-to-multipoint network scenarios, when a case that a failure of a receiving-end network device exists and so on, and after service path switching is caused, network packet loss measurement may be performed normally.
According to one aspect, for the method for measuring network packet loss according to the embodiment of the present invention, further, before the sending end sends the OAM packet including the measurement period identifier to be queried to the receiving end, the method further includes that:
The sending end adds a generic associated channel label (Generic Associated Channel Label, GAL for short) to the OAM packet, and encapsulates the OAM packet according to a destination address of the service stream.

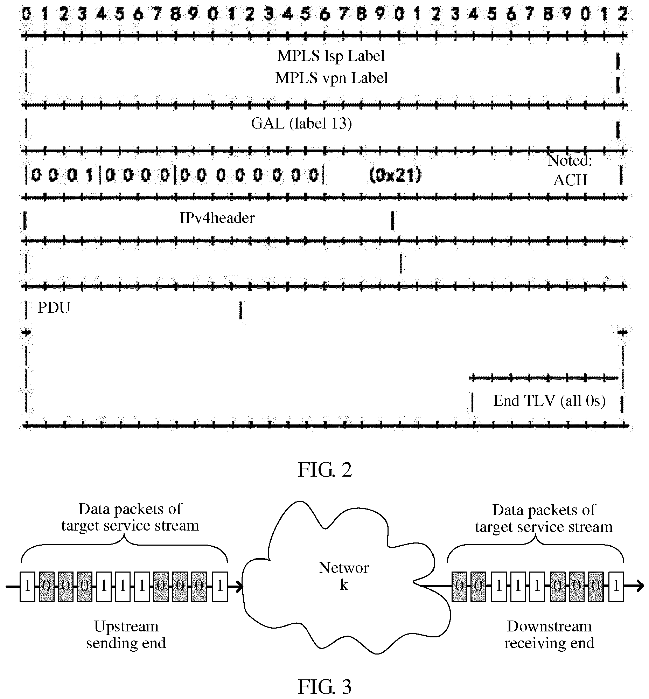

FIG. 2 is a schematic diagram of OAM packet encapsulation in the first embodiment of a method for measuring network packet loss according to the present invention. Specifically, in order to enable an OAM packet to pass through a same path as a service data packet a route for a data packet of a service stream is searched from a sending-end network device and then two-layer encapsulation is performed on the OAM packet. Referring to FIG. 2, encapsulation labels are an outer MPLS lsp Label and an inner MPLS vpn Label. With the two-layer encapsulation, the OAM packet has a same destination address as the data packet of the service stream. In this case, even if switching occurs in any network node device in a network, the OAM packet may be transmitted to a new receiving-end network device along with the data packet of the service stream according to an encapsulated new destination IP address. However, the receiving-end network device needs to distinguish the OAM packet from a normal data packet of the service stream. In this embodiment, a GAL label is used to identify the OAM packet, where the GAL label is a reserved label defined in IETF MPLS. After the receiving-end network device pops both the outer and inner labels of the OAM packet, the receiving-end network device obtains the GAL label of the OAM packet. The receiving-end network device determines, according to the label, that the received packet is an OAM packet, and performs, according to the measurement period identifier to be queried which is included in the OAM packet, querying through OAM deployed at the receiving end, to search a second data packet count corresponding to the measurement period identifier to be queried.

In the prior art, when a service stream is transmitted on a network, switching may occur on each network node of the network, and in this case, a related IP address in an IP packet in an OAM packet of the prior art is not updated, resulting in that the OAM packet for performing packet loss measurement cannot reach a receiving end for performing corresponding packet loss measurement. However, in this embodiment, the OAM packet sent by the network device at the sending end is encapsulated by using labels, that is, an MPLS lsp Label and an MPLS vpn Label, which ensures that the OAM packet and the data packet of the service stream are transmitted on a same path. After a failover occurs on a node of the network, a path of the service stream is also switched accordingly. In this case, an encapsulated outer MPLS lsp Label and inner MPLS vpn Label are also updated, which ensures that the OAM packet and the service stream are subsequently transmitted on the same path. Therefore, in point-to-multipoint and multipoint-to-multipoint network scenarios, after a service link is switched, a network packet loss situation can be still measured accurately.

According to another aspect, for the method for measuring network packet loss according to the embodiment of the present invention, further, the sending end is a cell site gateway (Cell Site Gateway, CSG for short), the receiving end is a radio network controller site gateway (Radio Network Controller Site Gateway, RSG for short), and before the performing data packet counting processing on a service stream sent to a receiving end, the method further includes:

identifying, by the CSG, the service stream according to characteristic information of the service stream to determine whether the service stream is a target service stream.

Specifically, first each service stream has particular characteristic information of the service stream, and the characteristic information of the service stream includes at least duple information in a quintuple. The quintuple refers to a source IP address, a destination IP address, an IP address prefix, a source protocol port number, and a destination protocol port number, in an IP header. In addition to the quintuple, optionally, information of type of service (Type of Service, TOS for short) fields in the IP header may also be added to specify the characteristic information of the service stream. The fields may be all specified, in this case, the measured service stream is finer; or the fields may be partially specified, for example, the source IP address and destination IP address in the quintuple are specified as the characteristic information of the service stream; or the source IP address, destination IP address, and IP address prefix are specified as the characteristic information of the service stream; or the source IP address, destination IP address, IP address prefix, and TOS information are specified as the characteristic information of the service stream.

After a service stream enters a network, first an upstream sending-end network device CSG needs to identify the service stream. The identification process is: The network device performs matching identification according to preset service stream characteristic information and the service stream characteristic information of the service stream, and if the two are matched successfully, the upstream sending-end network device CSG determines that the service stream is a target service stream. When a transmission scenario of the service stream on the network is a point-to-multipoint or multipoint-to-multipoint network scenario, regardless of a specific path of the service stream, it may be determined, based on the service stream characteristic information of the service stream, whether data packets at each upstream sending end and downstream receiving end belong to a same service stream.

If the data packets belong to the same service stream, the network device CSG adds an identifier to the data packets of the service stream according to a current measurement period identifier.

FIG. 3 is a schematic diagram of a method for adding an identifier in the first embodiment of a method for measuring network packet loss according to the present invention. As shown in FIG. 3, an identifier is added to a data packet of a service stream, that is, an identifier is periodically added, at an upstream sending-end CSG, to a reserved bit in an IP header of each data packet of the service stream. For example, as shown in FIG. 3, an identifier 1 is added to data packets in a period interval, and an identifier 0 is added to data packets in an adjacent period interval. Therefore, data packets of the service stream may be divided into different measurement intervals according to identifier attributes.

Counters are set on the upstream sending-end network device CSG to collect statistics on counts of data packets of the service stream with different identifiers at intervals, where the number of counters is the same as the number of identifier attributes, and measurement is performed at each period interval, for example, a count of data packets at an $i^{th}$ interval of the upstream sending-end network device CSG is N; corresponding counters are also set on a downstream receiving-end network device RSG to separately count data packets with different identifiers, for example, a count of second data packets at an $i^{th}$ interval of the downstream receiving-end network device RSG is M. In addition, because identifiers of adjacent intervals are different, even if service data packets with disordered other identifiers occur at the boundary of the adjacent intervals, the service data packets are not counted in the counter of the identifier, but are counted in counters of corresponding identifiers of the service data packets with disordered other identifiers, thereby ensuring accuracy and integrity of counting. For example, referring to FIG. 3, for a service stream, the upstream sending-end network device CSG adds an identifier 1 to data packets in a period, and adds an identifier 0 to data packets in an adjacent period; a counter 1 is set to collect statistics on counts of the data packets to which the identifier 1 is added, and a counter 0 is set to collect statistics on counts of the data packets to which the identifier 0 is added. Corresponding counter 1 and counter 0 are also set on the downstream receiving end raw device RSG to separately count data packets with an identifier 1 and data packets with an identifier 0 in a same service stream. Therefore, even if disorder occurs in a sending process, for example, data packets to which the identifier 1 is added appear in a group of data packets to which the identifier 0 is added, the counter 1 still counts the number of the data packets to which the identifier 1 is added, and the counter 0 still counts the number of the data packets to which the identifier 0 is added.

The receiving-end network device RSG feeds back a measurement packet carrying a second data packet count M to the sending-end network device CSG. By performing synchronous identification by using a method, the CSG compares a first data packet count and second data packet count belonging to a same measurement period identifier to obtain a packet loss statistical result in the period. For a measurement interval i, the number of lost packets = N - M.

Performing data packet counting processing on the service stream sent to the receiving end includes:

counting, by the CSG by using counters corresponding to different identifiers, data packets to which different identifiers are added.

Specifically, in measurement intervals in a unit of measurement period, for each measurement interval, a measurement period identifier to which the measurement interval belongs is unique. Therefore, the objective may be achieved as long as data packets in two adjacent measurement intervals are distinguished. Therefore, optionally, adjacent measurement intervals are distinguished in a manner of adding identifiers according to an odd measurement period identifier and an even measurement period identifier alternately. For example, referring to FIG. 3, for a service stream, when the measurement period identifier is an even number, the upstream sending-end network device adds an identifier 0 to data packets in the measurement interval; and when the measurement period identifier is an odd number, the upstream sending-end network device adds an identifier 1 to data packets in the measurement interval. Because data packets in different measurement period identifiers have different identifiers, in this case, the sending-end network device CSG uses counters corresponding to different identifiers to count data packets with different identifiers. For example, after a target service stream enters the sending-end network device CSG, an identifier 0 is added to data packets in a unit measurement period, and an identifier 1 is added to data packets in an adjacent unit measurement period. In this case, the upstream network device is disposed with a counter 0 and a counter 1, hands over, in a unit of measurement period, the data packets with the identifier 0 to the corresponding counter 0 for counting data packets, and hands over, in a unit of measurement period, the data packets with the identifier 1 to the corresponding counter 1 for counting data packets.

Adding an identifier to the data packets of the service stream may include:

adding an identifier to a reserved bit of a TOS or a reserved bit of a Flags in an IP header of the data packets.

Specifically, a range that may be specified for the identifier is total 6 bits in the two fields TOS and Flags in the IP header of the data packets, that is, the third to the seventh bits of the TOS, and the $0^{th}$ bit of flags. Specifically, in different specific networks, the last bits (the third to seventh bits) of the TOS are usually not used, especially the sixth and seventh bits are seldom used. Therefore, the bits of the IP header may be used to add an identifier. In an IP header of IPv4, the $0^{th}$ bit of Flags is a current unique reserved bit in the IP header. In a general IP header, the bit may be used to add an identifier to a data packet.

Further, performing data packet counting processing on the received service stream by the receiving end includes:

identifying, by the receiving end, the service stream according to characteristic information of the service stream, to determine whether the service stream is a target service stream.

Specifically, when the service stream reaches the downstream receiving-end network device RSG through the network, the receiving-end network device RSG also needs to identify the service stream according to the characteristic information of the service stream, to determine whether the service stream is a target service stream. This process is similar to the identification process of the upstream sending-end network device CSG, and is not repeatedly described herein.

If the service stream is a target service stream, the receiving end counts, by using counters corresponding to different identifiers and in a unit of measurement period, data packets to which different identifiers are added.

According to another aspect, for the method for measuring network packet loss according to the embodiment of the present invention, further, the sending end is an RSG, the receiving end is a CSG, and before the performing data packet counting processing on the service stream sent to the receiving end, the method further includes:

identifying, by the RSG, the service stream according to characteristic information of the service stream, to determine whether the service stream is a target service stream; and
if the service stream is a target service stream, adding, by the RSG, an identifier to the data packets of the service stream according to a current measurement period identifier; and
the performing data packet counting processing on the service stream sent to the receiving end includes:

counting, by the RSG by using counters corresponding to different identifiers and in a unit of measurement period, data packets to which different identifiers are added.
Further, performing data packet counting processing on the received service stream by the receiving end includes:
identifying, by the receiving end, the service stream according to characteristic information of the service stream, to determine whether the service stream is a target service stream; and
if the service stream is a target service stream, counting, by the receiving end by using counters corresponding to different identifiers and in a unit of measurement period, data packets to which different identifiers are added.

The foregoing method and technical solution are similar to that used when the sending end is a CSG and the receiving end is an RSG, and are not repeatedly described herein.

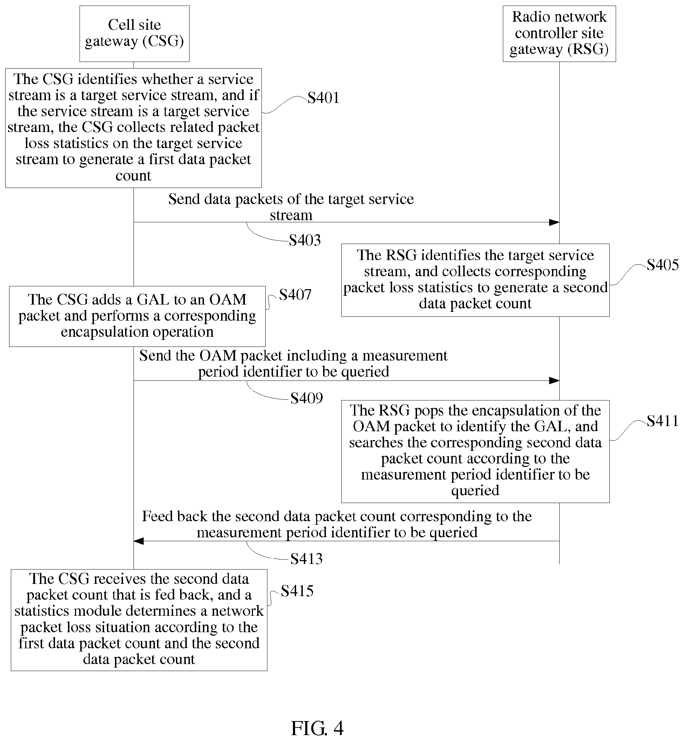

The network packet loss measurement provided by the embodiment of the present invention is implemented by a system which is deployed on a network and used for measuring network packet loss, where in the system for measuring network packet loss, devices for measuring network packet loss are disposed on a sending-end network device and a receiving-end network device separately. FIG. 4 is a signaling flowchart of a second embodiment of a method for measuring network packet loss according to the present invention. The following describes, based on FIG. 4, the first embodiment of the method for measuring network packet loss according to the present invention in detail.

The network devices in the embodiment of the present invention may be a CSG and an RSG. It is assumed that the CSG is a sending-end network device and that the RSG is a receiving-end network device.

S401. The CSG identifies whether a service stream is a target service stream, and if the service stream is a target service stream, the CSG collects related packet loss statistics of the target service stream to generate a first data packet count.

Specifically, after a service stream flows into a network, the sending-end network device CSG identifies the corresponding target service stream, and adds an identifier to data packets in each measurement interval in a unit of measurement period. The specific identification method and technical solution have been described in detail in the first embodiment of the method for measuring network packet loss, and are not repeatedly described herein. If the service stream is a target service stream, the CSG counts the target service stream, and enables data packets with different identifiers to correspond to different counters for counting. The specific counting method and technical solution are described in detail in the first embodiment of the method for measuring network packet loss, and are not repeatedly described herein. And a first data packet count is generated.

S403. The CSG sends a data packet of the target service stream to the RSG.

The target service stream after being counted is transmitted by the CSG to the RSG through the network.

S405. The RSG identifies the target service stream, and collects corresponding packet loss statistics to generate a second data packet count.

Specifically, the RSG identifies the service stream according to the characteristic information of the service stream, and when the service stream is matched, collects corresponding packet loss statistics of the target service stream. The method and technical solution of the RSG are similar to that of the CSG, and are not repeatedly described herein.

S407. The CSG adds a GAL label to an OAM packet and performs a corresponding encapsulation operation.

Because that the OAM packet and the data packet of the service stream are transmitted on a same path is required, the OAM packet is encapsulated. In addition, in order that the RSG identifies the OAM packet after popping the encapsulation, a GAL label is added to the OAM packet. For details, reference may be made to FIG. 2.

S409. The CSG sends the OAM packet including a measurement period identifier to be queried.
S411. The RSG pops the encapsulation of the OAM packet to identify the GAL, and searches the corresponding second data packet count according to the measurement period identifier to be queried.
S413. The RSG feeds back the second data packet count corresponding to the measurement period identifier to be queried.

Specifically, according to the measurement period identifier to be queried which is carried in the OAM packet, the RSG feeds back, to the CSG, a corresponding data packet carrying the second data packet count. Optionally, two-layer encapsulation is also performed on the data packet, and is transmitted after a GAL label is added.

S415. The CSG receives the second data packet count that is fed back, and a statistics module determines a network packet loss situation according to the first data packet count and the second data packet count.

Specifically, after receiving the second data packet count fed back by the RSG, the sending-end CSG compares the first data packet count and second data packet count corresponding to a consistent measurement period identifier, to obtain the network packet loss situation of the measurement period identifier by calculation. When the RSG is a sending end of the OAM packet, and the CSG is a receiving end of the OAM packet, the principle is similar, and is not repeatedly described. By using the method for measuring network packet loss according to the embodiment of the present invention, on the basis of the method provided in FIG. 1, a sending-end network device identifies a service stream according to characteristic information of the service stream, to determine whether the service stream is a target service stream, and if the service stream is a target service stream, the sending-end network device adds an identifier to data packets of the service stream according to a current measurement period identifier; and performing data packet counting processing on a service stream sent to a receiving end includes: counting, by the sending-end network device by using counters corresponding to different identifiers, data packets to which different identifiers are added. Performing packet counting statistics on data packets of the service stream is implemented according to a unit of measurement period. In point-to-point, or point-to-multipoint, or multipoint-to-multipoint network scenarios, after switching occurs in a network node device, packet loss measurement can be still performed accurately. The sending end adds a GAL label to the OAM packet, and encapsulates the OAM packet according to a destination address of the service stream, and therefore, it is implemented that the OAM packet is distinguished from the data packets of the service stream at the receiving end, thereby ensuring that network packet loss measurement is performed normally.

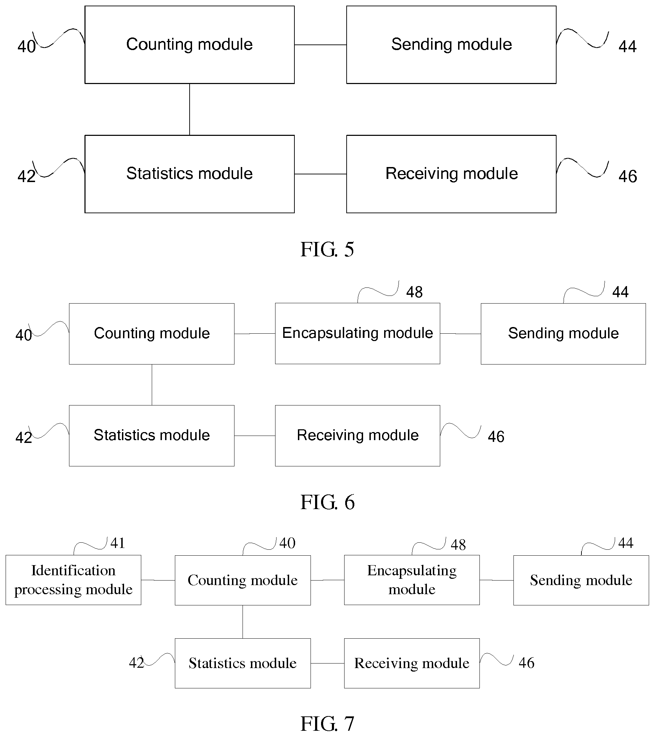

FIG. 5 is a schematic structural diagram of a first embodiment of a network device according to the present invention. As shown in FIG. 5, the network device includes a counting module 40, a statistics module 42, a sending module 44, and a receiving module 46.

The counting module 40 is configured to perform data packet counting processing on a service stream sent to a receiving end, to obtain a first data packet count corresponding to a measurement period identifier.

Specifically, the counting module 40 sets corresponding counters for different measurement period identifiers.

The sending module 44 is configured to send an OAM packet including a measurement period identifier to be queried to the receiving end, where the OAM packet and a data packet of the service stream are transmitted on a same path.

Specifically, the sending module 44 encapsulates the OAM packet, so that the sent OAM packet and the data packet of the service stream have a same destination IP address, thereby ensuring that the OAM packet and the data packet of the service stream are transmitted on the same path.

The receiving module 46 is configured to receive a second data packet count that is fed back by the receiving end after the receiving end receives the OAM packet and corresponding to the measurement period identifier to be queried, where the second data packet count is a count obtained by the receiving end by performing data packet counting processing on the received service stream.

The statistics module 42 is configured to determine a network packet loss situation according to the first data packet count and the second data packet count.

The specific determining method and calculation formula of a network packet loss situation have been described in detail in S106 provided by the first embodiment of the method for measuring network packet loss, and are not repeatedly described herein.

The network device in this embodiment may be used to execute the technical solution of a method embodiment shown in FIG. 1. Implementation principles and technical effects thereof are similar, and are not repeatedly described herein.

FIG. 6 is a schematic structural diagram of a second embodiment of a network device according to the present invention. Based on the structure of the network device in FIG. 5, the network device in the second embodiment further includes an encapsulating module 48.

The encapsulating module 48 is configured to: before the sending module 44 sends the OAM packet including the measurement period identifier to be queried to the receiving end, add a GAL label to the OAM packet, and encapsulate the OAM packet according to a destination address of the service stream.

Specifically, to ensure that the OAM packet and the data packet of the service stream are transmitted on the same path, the statistics module 48 encapsulates the OAM packet before the sending module 44 sends the OAM packet. The specific encapsulation method and technical solution have been described in the first embodiment of the method for measuring network packet loss, and are not repeatedly described herein.

The network device in this embodiment may be used to execute the technical solution of the method embodiment shown in FIG. 1. The implementation principles and technical effects thereof are similar, and are not repeatedly described herein.

FIG. 7 is a schematic structural diagram of a third embodiment of a network device according to the present invention. Based on the structure of the network device in FIG. 5 or FIG. 6, the network device in the third embodiment further includes an identification processing module 41.

The identification processing module 41 is configured to identify the service stream according to characteristic information of the service stream, to determine whether the service stream is a target service stream, and if the service stream is a target service stream, add an identifier to the data packet of the service stream according to a current measurement period identifier.

The working method and technical solution of the identification processing module have been described in the first embodiment of the method for measuring network packet loss, and are not repeatedly described herein.

The counting module 40 is specifically configured to count, by using counters corresponding to different identifiers, data packets to which different identifiers are added.

The working method and technical solution of the counting module have been described in the first embodiment of the method for measuring network packet loss, and are not repeatedly described herein.

For the third embodiment of the network device of the present invention, further, the device is an RSG, and the receiving end is a CSG; or the device is a CSG, and the receiving end is an RSG.

The network device of this embodiment may be used to execute the technical solution of the method embodiment shown in FIG. 1. The implementation principles and technical effects thereof are similar, and are not repeatedly described herein.

A system for measuring network packet loss according to an embodiment of the present invention includes: a CSG and at least one RSG, where the CSG uses any network device in the first embodiment to the third embodiment of the network device in the present invention, and the RSG uses any network device in the first embodiment to the third embodiment of the network device in the present invention.

In the system for measuring network packet loss according to the embodiment of the present invention, the CSG uses any network device in the first embodiment to the third embodiment of the network device in the present invention, and the RSG uses any network device in the first embodiment to the third embodiment of the network device in the present invention. The system may execute the technical solution of the first embodiment of the method for measuring network packet loss according to the present invention. The implementation principles and technical effects of the system are similar, and are not repeatedly described herein.

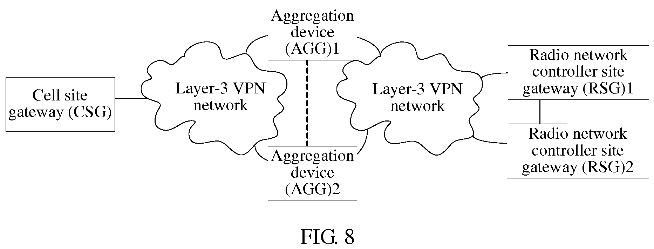

FIG. 8 is a schematic structural diagram of a second embodiment of a system for measuring network packet loss according to the present invention. With reference to FIG. 8, the following describes a specific problem of the system for measuring network packet loss according to the present invention in two networks: an HoVPN (Hierarchy of VPN) and an H-VPN (Hierarchy VPN).

Referring to FIG. 8, a network is a first VPN (the first VPN is a hierarchy VPN, Hierarchy-VPN, H-VPN for short) network. When an OAM packet is sent in a direction from a CSG to an RSG, the OAM packet is forwarded through an aggregation device (Aggregation, AGG for short). Referring to FIG. 2, the AGG only pops an outer MPLS lsp Label of OAM, and replaces the MPLS lsp Label for forwarding. In this process, an MPLS vpn Label is not popped, and consequently a GAL label is not exposed. Therefore, the OAM packet is directly forwarded through an AGG node. If switching occurs in an AGG1 and an AGG2, forwarding of the OAM packet is not affected.

When an OAM packet is sent in a direction from the RSG to the CSG, the OAM packet is sent in a direction from a CSG to an RSG, because an AGG needs to configure a VPN instance, the VPN instance of the AGG learns a route to the RSG, and meanwhile, a default route is advertised to the CSG by using a routing policy, that is, when the CSG encapsulates the OAM packet, because a function of the CSG is limited, all OAM packets share a same MPLS VPN Label. When such an OAM packet is forwarded through the AGG, both an outer label and an inner label of the OAM packet are popped, and the AGG identifies, according to a GAL label, that the packet is an OAM packet. In this case, the AGG queries a private network routing table to send the OAM packet to the RSG, thereby implementing forwarding of the OAM packet.

For the HoVPN network, when an OAM packet is sent in a direction from the RSG to the CSG, the principle is the same as that in the H-VPN network, and is not repeatedly described herein.

Persons of ordinary skill in the art may understand that all or a part of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments, without departing from the scope of the technical solutions of the embodiments of the present invention.

## Claims

1. A method for measuring network packet loss, comprising:

   performing (S100), by a sending end, data packet counting processing on a service stream sent to a receiving end, to obtain a first data packet count corresponding to a measurement period identifier;

   sending (S102), by the sending end, an operation, administration, maintenance, OAM, packet comprising a measurement period identifier to be queried to the receiving end, wherein the OAM packet and a data packet of the service stream are transmitted on a same path;

   receiving (S104), by the sending end, a second data packet count that is fed back by the receiving end after the receiving end receives the OAM packet and corresponding to the measurement period identifier to be queried, wherein the second data packet count is a count obtained by the receiving end by performing data packet counting processing on the received service stream; and

   determining (S106), by the sending end, a network packet loss situation according to the first data packet count and the second data packet count;

   wherein before the sending, by the sending end, an OAM packet comprising a measurement period identifier to be queried to the receiving end, the method further comprises:

   adding, by the sending end, a generic associated channel label, GAL, to the OAM packet, and encapsulating the OAM packet according to a destination address of the service stream.

2. The method according to claim 1, wherein the sending end is a cell site gateway, CSG, the receiving end is a radio network controller site gateway, RSG, and before the performing data packet counting processing on a service stream sent to a receiving end, the method further comprises:

   identifying (S401), by the CSG, the service stream according to characteristic information of the service stream, to determine whether the service stream is a target service stream; and

   if the service stream is a target service stream, adding (S401), by the CSG, an identifier to the data packet of the service stream according to the current measurement period identifier; and

   the performing (S100) data packet counting processing on a service stream sent to a receiving end comprises:

   counting, by the CSG by using counters corresponding to different identifiers, data packets to which different identifiers are added.

3. The method according to claim 1, wherein the sending end is an RSG, the receiving end is a cell site gateway, CSG, and before the performing (S100) data packet counting processing on a service stream sent to a receiving end, the method further comprises:

   identifying, by the RSG, the service stream according to characteristic information of the service stream, to determine whether the service stream is a target service stream; and

   if the service stream is a target service stream, adding, by the RSG, an identifier to the data packet of the service stream according to the current measurement period identifier; and

the performing (S100) data packet counting processing on a service stream sent to a receiving end comprises:

counting, by the RSG by using counters corresponding to different identifiers, data packets to which different identifiers are added, in a unit of measurement period.

4. The method according to claim 2 or 3, wherein the performing (S100), by the sending end, data packet counting processing on the received service stream comprises:

identifying, by the sending end, the service stream according to characteristic information of the service stream, to determine whether the service stream is a target service stream; and
if the service stream is a target service stream, counting, by the sending end by using counters corresponding to different identifiers, data packets to which different identifiers are added, in a unit of measurement period.

5. A network device, comprising a counting module (40), a sending module (44), a receiving module (46), and a statistics module (42), wherein:

the counting module (40) is configured to perform data packet counting processing on a service stream sent to a receiving end, to obtain a first data packet count corresponding to a measurement period identifier;
the sending module (44) is configured to send an operation, administration, maintenance, OAM, packet comprising a measurement period identifier to be queried, to the receiving end, wherein the OAM packet and a data packet of the service stream are transmitted on a same path;
the receiving module (46) is configured to receive a second data packet count that is fed back by the receiving end after the receiving end receives the OAM packet and corresponding to the measurement period identifier to be queried, wherein the second data packet count is a count obtained by the receiving end by performing data packet counting processing on the received service stream; and
the statistics module (42) is configured to determine a network packet loss situation according to the first data packet count and the second data packet count;
wherein the network device further comprises:

an encapsulating module (48), configured to: before the sending module (44) sends the OAM packet comprising the measurement period identifier to be queried to the receiving end, add a generic associated channel label, GAL, to the OAM packet, and encapsulate the OAM packet according to a destination address of the service stream.

6. The network device according to claim 5, further comprising:

an identification processing module (41), configured to identify the service stream according to characteristic information of the service stream, to determine whether the service stream is a target service stream, and if the service stream is a target service stream, add an identifier to the data packet of the service stream according to the current measurement period identifier; wherein
the counting module (40) is specifically configured to count, by using counters corresponding to different identifiers, data packets to which different identifiers are added.

7. The network device according to claim 6, wherein the network device is a radio network controller site gateway, RSG, and the receiving end is a cell site gateway, CSG; or the network device is a CSG and the receiving end is an RSG.

8. A system for measuring network packet loss, comprising a cell site gateway, CSG, and at least one radio network controller site gateway, RSG, wherein the CSG uses the network device according to any one of claims 5 to 7, the RSG uses the network device according to any one of claims 5 to 7, one of the CSG and the RSG serves as a sending end, and the other one serves as a receiving end.

**Patentansprüche**

1. Verfahren zur Messung von Netzpaketverlust, umfassend:

Durchführen (S100) von Datenpaketzählungsverarbeitung durch ein sendendes Ende an einem Dienststrom, der an ein empfangendes Ende gesendet wird, um eine erste Datenpaketzählung zu erhalten, die einer Messperiodenkennung entspricht;

Senden (S102) eines OAM(Betrieb, Verwaltung und Wartung)-Pakets mit einer abzufragenden Messperiodenkennung durch das sendende Ende an das empfangende Ende, wobei das OAM-Paket und ein Datenpaket des Dienststroms auf dem gleichen Pfad gesendet werden;

Empfangen (S104) durch das sendende Ende einer zweiten Datenpaketzählung, die durch das empfangende Ende nach Empfang des OAM-Pakets durch das empfangende Ende und entsprechend der abzufragenden Messperiodenkennung rückgemeldet wird, wobei die zweite Datenpaketzählung eine Zählung ist, die durch das empfangende Ende durch Durchführen von Datenpaketzählungsverarbeitung am empfangenen Dienststrom erhalten wird; und

Bestimmen (S106) einer Netzpaketverlustsituation gemäß der ersten Datenpaketzählung und der zweiten Datenpaketzählung durch das sendende Ende;

wobei das Verfahren vor dem Senden eines OAM-Pakets mit einer abzufragenden Messperiodenkennung durch das sendende Ende an das empfangende Ende umfasst:

Hinzufügen einer generischen assoziierten Kanalkennzeichnung, GAL, durch das sendende Ende zum OAM-Paket und Verkapseln des OAM-Pakets gemäß einer Zieladresse des Dienststroms.

2. Verfahren nach Anspruch 1, wobei das sendende Ende ein Zellenstandorts-Gateway, CSG, ist, das empfangende Ende ein Funknetzsteuerungsstandorts-Gateway, RSG, ist, und das Verfahren vor dem Durchführen von Datenpaketzählungsverarbeitung an einem an ein empfangendes Ende gesendeten Dienststrom ferner umfasst:

Identifizieren (S401) des Dienststroms durch das CSG gemäß charakteristischen Informationen des Dienststroms, um zu bestimmen, ob der Dienststrom ein Zieldienststrom ist; und

Hinzufügen (S401) durch das CSG, wenn der Dienststrom ein Zieldienststrom ist, einer Kennung zum Datenpaket des Dienststroms gemäß der aktuellen Messperiodenkennung; und

wobei das Durchführen (S100) von Datenpaketzählungsverarbeitung an einem an ein empfangendes Ende gesendeten Dienststrom umfasst:

Zählen von Datenpaketen, zu welchen verschiedene Kennungen hinzugefügt sind, durch das CSG durch Verwenden von Zählern, die verschiedenen Kennungen entsprechen.

3. Verfahren nach Anspruch 1, wobei das sendende Ende ein RSG ist, das empfangende Ende ein Zellenstandorts-Gateway, CSG, ist, und das Verfahren vor dem Durchführen (S100) von Datenpaketzählungsverarbeitung an einem an ein empfangendes Ende gesendeten Dienststrom ferner umfasst:

Identifizieren des Dienststroms durch das RSG gemäß charakteristischen Informationen des Dienststroms, um zu bestimmen, ob der Dienststrom ein Zieldienststrom ist; und

Hinzufügen durch das RSG, wenn der Dienststrom ein Zieldienststrom ist, einer Kennung zum Datenpaket des Dienststroms gemäß der aktuellen Messperiodenkennung; und

wobei das Durchführen (S100) von Datenpaketzählungsverarbeitung an einem an ein empfangendes Ende gesendeten Dienststrom umfasst:

Zählen von Datenpaketen, zu welchen verschiedene Kennungen hinzugefügt sind, durch das RSG durch Verwenden von Zählern, die verschiedenen Kennungen entsprechen.

4. Verfahren nach Anspruch 2 oder 3, wobei das Durchführen (S100) von Datenpaketzählungsverarbeitung durch das sendende Ende am empfangenen Dienststrom umfasst:

Identifizieren des Dienststroms durch das sendende Ende gemäß charakteristischen Informationen des Dienststroms, um zu bestimmen, ob der Dienststrom ein Zieldienststrom ist; und

Zählen durch das sendende Ende, wenn der Dienststrom ein Zieldienststrom ist, von Datenpaketen, zu welchen verschiedene Kennungen hinzugefügt sind, in einer Messperiodeneinheit durch Verwenden von Zählern, die verschiedenen Kennungen entsprechen.

5. Netzvorrichtung, umfassend ein Zählmodul (40), ein Sendemodul (44), ein Empfangsmodul (46) und ein Statistikmodul (42), wobei:

das Zählmodul (40) so konfiguriert ist, dass es Datenpaketzählungsverarbeitung an einem Dienststrom, der an ein empfangendes Ende gesendet wird, durchführt, um eine erste Datenpaketzählung zu erhalten, die einer Messperiodenkennung entspricht;

das Sendemodul (44) so konfiguriert ist, dass es ein OAM(Betrieb, Verwaltung und Wartung)-Paket mit einer abzufragenden Messperiodenkennung an das empfangende Ende sendet, wobei das OAM-Paket und ein Datenpaket des Dienststroms auf dem gleichen Pfad gesendet werden;

das Empfangsmodul (46) so konfiguriert ist, dass es eine zweite Datenpaketzählung empfängt, die durch das empfangende Ende nach Empfang des OAM-Pakets durch das empfangende Ende und entsprechend der abzufragenden Messperiodenkennung rückgemeldet wird, wobei die zweite Datenpaketzählung eine Zählung ist, die durch das empfangende Ende durch Durchführen von Datenpaketzählungsverarbeitung am empfangenen Dienststrom erhalten wird; und

das Statistikmodul (42) so konfiguriert ist, dass es eine Netzpaketverlustsituation gemäß der ersten Datenpaketzählung und der zweiten Datenpaketzählung bestimmt;

wobei die Netzvorrichtung ferner umfasst:

ein Verkapselungsmodul (48), das konfiguriert ist zum: Hinzufügen einer generischen assoziierten Kanalkennzeichnung, GAL, zum OAM-Paket und Verkapseln des OAM-Pakets gemäß einer Zieladresse des Dienststroms, bevor das Sendemodul (44) das OAM-Paket mit der abzufragenden Messperiodenkennung an das empfangende Ende sendet.

6. Netzvorrichtung nach Anspruch 5, ferner umfassend:

ein Identifikationsverarbeitungsmodul (41), das so konfiguriert ist, dass es den Dienststrom gemäß charakteristischen Informationen des Dienststroms identifiziert, um zu bestimmen, ob der Dienststrom ein Zieldienststrom ist, und wenn der Dienststrom ein Zieldienststrom ist, eine Kennung zum Datenpaket des Dienststroms gemäß der aktuellen Messperiodenkennung hinzufügt; wobei das Zählmodul (40) insbesondere so konfiguriert ist, dass es durch Verwenden von Zählern, die verschiedenen Kennungen entsprechen, Datenpakete zählt, zu welchen verschiedene Kennungen hinzugefügt sind.

7. Netzvorrichtung nach Anspruch 6, wobei die Netzvorrichtung ein Funknetzsteuerungsstandorts-Gateway, RSG, ist, und das empfangende Ende ein Zellenstandorts-Gateway, CSG, ist; oder die Netzvorrichtung ein CSG ist, und das empfangende Ende ein RSG ist.

8. System zum Messen von Netzpaketverlust, umfassend ein Zellenstandorts-Gateway, CGS, und mindestens ein Funknetzsteuerungsstandorts-Gateway, RSG, wobei das CSG die Netzvorrichtung nach einem der Ansprüche 5 bis 7 verwendet, das RSG die Netzvorrichtung nach einem der Ansprüche 5 bis 7 verwendet, und das CSG oder das RSG als ein sendendes Ende dient und das andere als ein empfangendes Ende dient.

**Revendications**

1. Procédé de mesure de perte de paquets de réseau, comportant les étapes consistant à :

faire effectuer (S100), par une extrémité d'émission, un traitement de comptage de paquets de données sur un flux de service envoyé à une extrémité de réception, pour obtenir un premier comptage de paquets de données correspondant à un identifiant de période de mesure ;

faire envoyer (S 102) à l'extrémité de réception, par l'extrémité d'émission, un paquet d'exploitation, d'administration et de maintenance, OAM, comportant un identifiant de période de mesure à interroger, le paquet d'OAM et un paquet de données du flux de service étant transmis sur un même chemin ;

faire recevoir (S 104), par l'extrémité d'émission, un deuxième comptage de paquets de données qui est renvoyé par l'extrémité de réception après que l'extrémité de réception a reçu le paquet d'OAM et correspondant à l'identifiant de période de mesure à interroger, le deuxième comptage de paquets de données étant un comptage obtenu par l'extrémité de réception en effectuant un traitement de comptage de paquets de données sur le flux de service reçu ; et

faire déterminer (S 106), par l'extrémité d'émission, une situation de perte de paquets de réseau d'après le premier comptage de paquets de données et le deuxième comptage de paquets de données ;

le procédé comportant en outre, avant l'envoi à l'extrémité de réception, par l'extrémité d'émission, d'un paquet d'OAM comportant un identifiant de période de mesure à interroger, les étapes consistant à :

faire ajouter, par l'extrémité d'émission, une étiquette générique associée de canal, GAL, au paquet d'OAM, et encapsuler le paquet d'OAM d'après une adresse de destination du flux de service.

2. Procédé selon la revendication 1, l'extrémité d'émission étant une passerelle de site de cellule, CSG, l'extrémité de réception étant une passerelle de site de contrôleur de réseau radio, RSG, et le procédé comportant en outre, avant la réalisation d'un traitement de comptage de paquets de données sur un flux de service envoyé à une extrémité de réception, les étapes consistant à :

faire identifier (S401), par la CSG, le flux de service d'après des informations caractéristiques du flux de service, pour déterminer si le flux de service est un flux de service cible ; et
si le flux de service est un flux de service cible, faire ajouter (S401), par la CSG, un identifiant au paquet de données du flux de service d'après l'identifiant actuel de période de mesure ; et
la réalisation (S 100) d'un traitement de comptage de paquets de données sur un flux de service envoyé à une extrémité de réception comportant l'étape consistant à :

faire compter, par la CSG en utilisant des compteurs correspondant à différents identifiants, des paquets de données auxquels différents identifiants sont ajoutés.

3. Procédé selon la revendication 1, l'extrémité d'émission étant une RSG, l'extrémité de réception est une passerelle de site de cellule, CSG, et le procédé comportant en outre, avant la réalisation (S 100) d'un traitement de comptage de paquets de données sur un flux de service envoyé à une extrémité de réception, les étapes consistant à :

faire identifier, par la RSG, le flux de service d'après des informations caractéristiques du flux de service, pour déterminer si le flux de service est un flux de service cible ; et
si le flux de service est un flux de service cible, faire ajouter, par la RSG, un identifiant au paquet de données du flux de service d'après l'identifiant actuel de période de mesure ; et
la réalisation (S 100) d'un traitement de comptage de paquets de données sur un flux de service envoyé à une extrémité de réception comportant l'étape consistant à :

faire compter par la RSG, en utilisant des compteurs correspondant à différents identifiants, des paquets de données auxquels différents identifiants sont ajoutés, dans une unité de période de mesure.

4. Procédé selon la revendication 2 ou 3, la réalisation (S 100), par l'extrémité d'émission, d'un traitement de comptage de paquets de données sur le flux de service reçu comportant les étapes consistant à :

faire identifier, par l'extrémité d'émission, le flux de service d'après des informations caractéristiques du flux de service, pour déterminer si le flux de service est un flux de service cible ; et
si le flux de service est un flux de service cible, faire compter par l'extrémité d'émission, en utilisant des compteurs correspondant à différents identifiants, des paquets de données auxquels différents identifiants sont ajoutés, dans une unité de période de mesure.

5. Dispositif de réseau, comportant un module (40) de comptage, un module (44) d'émission, un module (46) de réception, et un module (42) de statistiques :

le module (40) de comptage étant configuré pour effectuer un traitement de comptage de paquets de données sur un flux de service envoyé à une extrémité de réception, pour obtenir un premier comptage de paquets de données correspondant à un identifiant de période de mesure ;
le module (44) d'émission étant configuré pour envoyer à l'extrémité de réception un paquet d'exploitation, d'administration et de maintenance, OAM, comportant un identifiant de période de mesure à interroger, le paquet d'OAM et un paquet de données du flux de service étant transmis sur un même chemin ;
le module (46) de réception étant configuré pour recevoir un deuxième comptage de paquets de données qui est renvoyé par l'extrémité de réception après que l'extrémité de réception a reçu le paquet d'OAM et correspondant à l'identifiant de période de mesure à interroger, le deuxième comptage de paquets de données étant un comptage obtenu par l'extrémité de réception en effectuant un traitement de comptage de paquets de données sur le flux de service reçu ; et
le module (42) de statistiques étant configuré pour déterminer une situation de perte de paquets de réseau d'après le premier comptage de paquets de données et le deuxième comptage de paquets de données ;
le dispositif de réseau comportant en outre :

un module (48) d'encapsulation, configuré pour :

avant que le module (44) d'émission envoie le paquet d'OAM comportant l'identifiant de période de mesure à interroger à l'extrémité de réception, ajouter une étiquette générique associée de canal, GAL, au paquet d'OAM, et encapsuler le paquet d'OAM d'après une adresse de destination du flux de service.

6. Dispositif de réseau selon la revendication 5, comportant en outre :

un module (41) de traitement d'identification, configuré pour identifier le flux de service d'après des informations caractéristiques du flux de service, pour déterminer si le flux de service est un flux de service cible, et si le flux de service est un flux de service cible, ajouter un identifiant au paquet de données du flux de service d'après l'identifiant actuel de période de mesure ;
le module (40) de comptage étant spécifiquement configuré pour compter, en utilisant des compteurs correspondant à différents identifiants, des paquets de données auxquels différents identifiants sont ajoutés.

7. Dispositif de réseau selon la revendication 6, le dispositif de réseau étant une passerelle de site de contrôleur de réseau radio, RSG, et l'extrémité de réception étant une passerelle de site de cellule, CSG ; ou le dispositif de réseau étant une CSG et l'extrémité de réception étant une RSG.

8. Système de mesure de perte de paquets de réseau, comportant une passerelle de site de cellule, CSG, et au moins une passerelle de site de contrôleur de réseau radio, RSG, la CSG utilisant le dispositif de réseau selon l'une quelconque des revendications 5 à 7, la RSG utilisant le dispositif de réseau selon l'une quelconque des revendications 5 à 7, une passerelle parmi la CSG et la RSG servant d'extrémité d'émission, et l'autre servant d'extrémité de réception.

| A sending end performs data packet counting processing on a service stream sent to a receiving end, to obtain a first data packet count corresponding to a measurement period identifier | S100 |

| The sending end sends an OAM packet including a measurement period identifier to be queried, to the receiving end | S102 |

| The sending end receives a second data packet count that is fed back by the receiving end after the receiving end receives the OAM packet and corresponding to the measurement period identifier to be queried, where the second data packet count is a count obtained by the receiving end by performing data packet counting processing on the received service stream | S104 |

| The sending end determines a network packet loss situation according to the first data packet count and the second data packet count | S106 |

FIG. 1

```
  0 1 2 3 4 5 6 7 8 9 0 1 2 3 4 5 6 7 8 9 0 1 2 3 4 5 6 7 8 9 0 1 2
 +-+-+-+-+-+-+-+-+-+-+-+-+-+-+-+-+-+-+-+-+-+-+-+-+-+-+-+-+-+-+-+-+
 |                         MPLS lsp Label                          |
 |                         MPLS vpn Label                          |
 +-+-+-+-+-+-+-+-+-+-+-+-+-+-+-+-+-+-+-+-+-+-+-+-+-+-+-+-+-+-+-+-+
 |                         GAL (label 13)                          |
 +-+-+-+-+-+-+-+-+-+-+-+-+-+-+-+-+-+-+-+-+-+-+-+-+-+-+-+-+-+-+-+-+
 |0 0 0 1|0 0 0 0|0 0 0 0 0 0 0 0|      (0x21)          Noted:      |
 |                                                     ACH         |
 +-+-+-+-+-+-+-+-+-+-+-+-+-+-+-+-+-+-+-+-+-+-+-+-+-+-+-+-+-+-+-+-+
 |              IPv4header                  |                       |
 +-+-+-+-+-+-+-+-+-+-+-+-+-+-+-+-+-+-+-+-+-+-+-+-+-+-+-+-+-+-+-+-+
 |                                         |                       |
 +-+-+-+-+-+-+-+-+-+-+-+-+-+-+-+-+-+-+-+-+-+-+-+-+-+-+-+-+-+-+-+-+
 | PDU                          |                                  +
 +                                                                 |
 |                                          +-+-+-+-+-+-+-+-+      |
 |                                          | End TLV (all 0s) |    |
 +-+-+-+-+-+-+-+-+-+-+-+-+-+-+-+-+-+-+-+-+-+-+-+-+-+-+-+-+-+-+-+-+
```

FIG. 2

Data packets of                                    Data packets of
target service stream                              target service stream

→[1][0][0][0][1][1][1][0][0][0][1]→    Network    →[0][0][1][1][1][0][0][0][1]→

Upstream                                           Downstream
sending end                                        receiving end

FIG. 3

Cell site
gateway (CSG)

Radio network
controller site
gateway (RSG)

The CSG identifies whether a service
stream is a target service stream, and if
the service stream is a target service
stream, the CSG collects related packet
loss statistics on the target service
stream to generate a first data packet
count

S401

Send data packets of the target service
stream

S403

The RSG identifies the target service
stream, and collects corresponding
packet loss statistics to generate a second
data packet count

S405

The CSG adds a GAL to an OAM
packet and performs a corresponding
encapsulation operation

S407

Send the OAM packet including a measurement
period identifier to be queried

S409

The RSG pops the encapsulation of the
OAM packet to identify the GAL, and
searches the corresponding second data
packet count according to the
measurement period identifier to be
queried

S411

Feed back the second data packet count corresponding to the
measurement period identifier to be queried

S413

The CSG receives the second data
packet count that is fed back, and a
statistics module determines a network
packet loss situation according to the
first data packet count and the second
data packet count

S415

FIG. 4

FIG. 5

FIG. 6

FIG. 7

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20080080390 A
- EP 188152 A1